# EUROPEAN PATENT SPECIFICATION

(11) **EP 0 666 995 B1**
(45) Date of publication and mention of the grant of the patent: **06.10.2004**
(21) Application number: 92925056.1
(22) Date of filing: 02.11.1992
(51) Int. Cl.: G02B 6/38

(54) **OPTICAL FIBER CONNECTOR BIASING ARRANGEMENT**
VORSPANNVORRICHTUNG FÜR FASEROPTISCHE STECKER
AGENCEMENT DE SOLLICITATION DE CONNECTEURS DE FIBRES OPTIQUES

(43) Date of publication of application: 16.08.1995
(73) Proprietor: ITT MANUFACTURING ENTERPRISES, INC., Wilmington, Delaware 19801 (US)
(72) Inventor: COUTTS, Bruce, Costa Mesa, CA 92628-2162 (US)
(74) Representative: Esser, Wolfgang
(86) International application number: PCT/US1992/009403
(87) International publication number: WO 1994/010593

(56) References cited:
- EP-A- 0 128 044
- GB-A- 2 119 954
- PATENT ABSTRACTS OF JAPAN vol. 15, no. 322 (P-1239)30 September 1989
- PATENT ABSTRACTS OF JAPAN vol. 11, no. 35 (P-542)3 February 1987

## Description

### BACKGROUND OF THE INVENTION:

A common way to connect the front ends of two optical fibers is to polish their tips and have the tips abut each other. Due to the fact that the tips of the optical fibers have small diameters (e.g. 0.005 inch or 0.13 millimeter) they are commonly mounted in a cylindrical tip member that lies in a ferrule, or terminus body. The terminus body is mounted on the yoke of a connector which attaches to another connector that holds the other optical fiber. The terminus body must have some resilience in moving towards and away from the other optical fiber, in order to assure that the tips will abut despite some tolerances in how close the fiber tips approach each other when the connector housings are connected. US-Patents 4,516,829 and 4,804,243 by Borsuk et al describe the use of coil springs to bias the terminus bodies forwardly and allow them to deflect rearwardly. However, coil springs require additional space and add to the difficulty of mounting the terminus assemblies, especially in a multi-fiber arrangement where several terminus bodies are to be individually resiliently mounted on a yoke. Apparatus that simplified and compacted the biasing portion of the optical fiber assembly and which otherwise facilitated mounting of the terminus bodies on the yoke, would be of value.

### SUMMARY OF THE INVENTION

Optical fiber connectors according to the invention are defined in claims 1 and 5, the preambles of which correspond to Patents Abstracts of Japan, Vol.11, No. 35 (P-542), 03.02.1987. Claims 7 and 9 are related to methods for assembling such optical fiber connectors.

In accordance with one embodiment of the present invention, an optical fiber connector is provided that resiliently mounts a terminus assembly on a yoke of the connector housing, in a simple manner. The yoke has a hole and the terminus body lies in the hole, with a forward shoulder on the body lying slightly forward of the yoke front surface and a rear shoulder lying behind the yoke rear surface. The terminus body is biased forwardly by a leaf spring portion of a spring member. The leaf spring portion has a forwardly bowed middle that engages the forward shoulder of the terminus body, and has opposite end parts that abut the yoke front surface. Where two or more terminus assemblies are to be mounted in holes in the yoke, a single spring member can be used which has two or more leaf spring portions.

The hole in the yoke can be in the form of a slot that extends from the periphery of the yoke. This enables mounting of each terminus body separately by sliding it sidewardly along the slot. In one arrangement, the spring member is movable on the yoke, so after the terminus body is installed, the spring member is moved to move the middle of the leaf spring portion against the front shoulder of the body. In an other version, the leaf spring portion lies beside the slot, and as the body is slid into the slot its front shoulder slides over the middle of the leaf spring portion.

The novel features of the invention are set forth with particularity in the appended claims. The invention will be best understood from the following description when read in conjunction with the accompanying drawings.

### BRIEF DESCRIPTION OF THE DRAWINGS

Fig. 1 is a partially sectional, exploded, and isometric view of a connector assembly constructed in accordance with one embodiment of the present invention.
Fig. 2 is an exploded isometric view of a portion of one of the connectors of the assembly of Fig. 1.
Fig. 3 is a partially sectional side view of the connector assembly of Fig. 1, showing a terminus assembly and a portion of the surroundings thereof, prior to full mating of the connectors.
Fig. 4 is a partial isometric view of the apparatus of Fig. 3, with a portion of the spring member and yoke shown in phantom lines.
Fig. 5 is a sectional view of the terminus assembly of the apparatus of Fig. 3.
Fig. 6 is a plan view of a yoke and spring member constructed in accordance with another embodiment of the invention.
Fig. 7 is a view taken on the line 7 - 7 of Fig. 6.
Fig. 8 is a view taken on line 8 - 8 of Fig. 7.
Fig. 9 is a partial sectional view of a modified form of the apparatus of Fig. 8.

### DESCRIPTION OF THE PREFERRED EMBODIMENTS

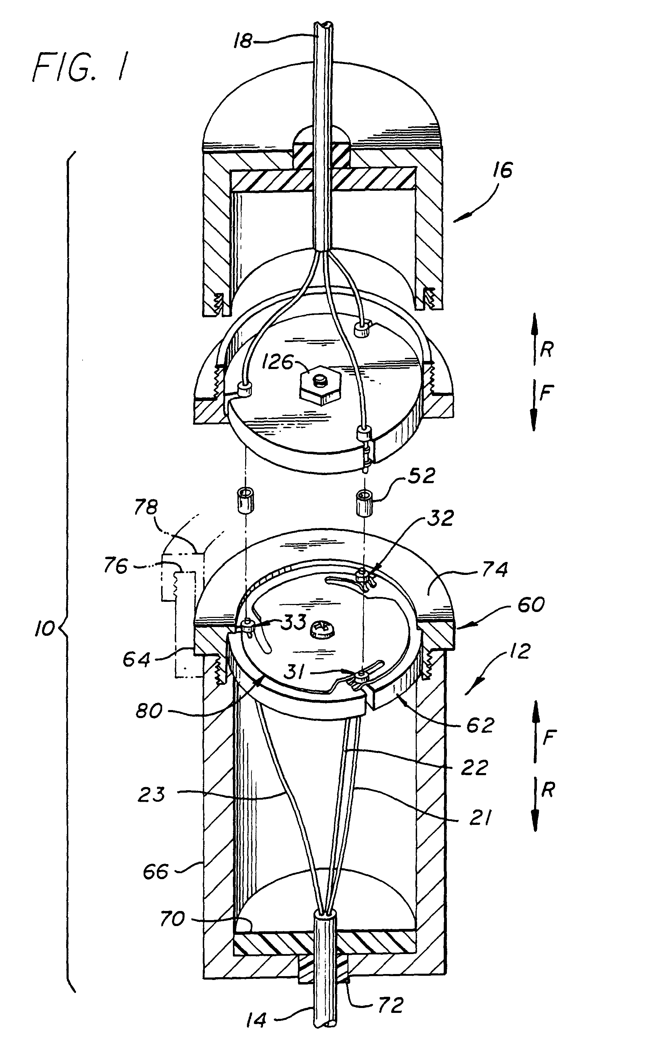

Fig. 1 illustrates a connector assembly 10 which includes a first connector 12 attached to a first optical fiber assembly 14 and a second connector or connector device 16 which is attached to a second optical fiber assembly 18. Each optical fiber assembly includes three optical fibers that must be connected to the three optical fibers of the other assembly. The first fiber assembly 14 has three buffered fibers 21 - 23, each containing an optical fiber, and each coupled to a different one of three terminus assemblies or assembly devices 31 - 33.

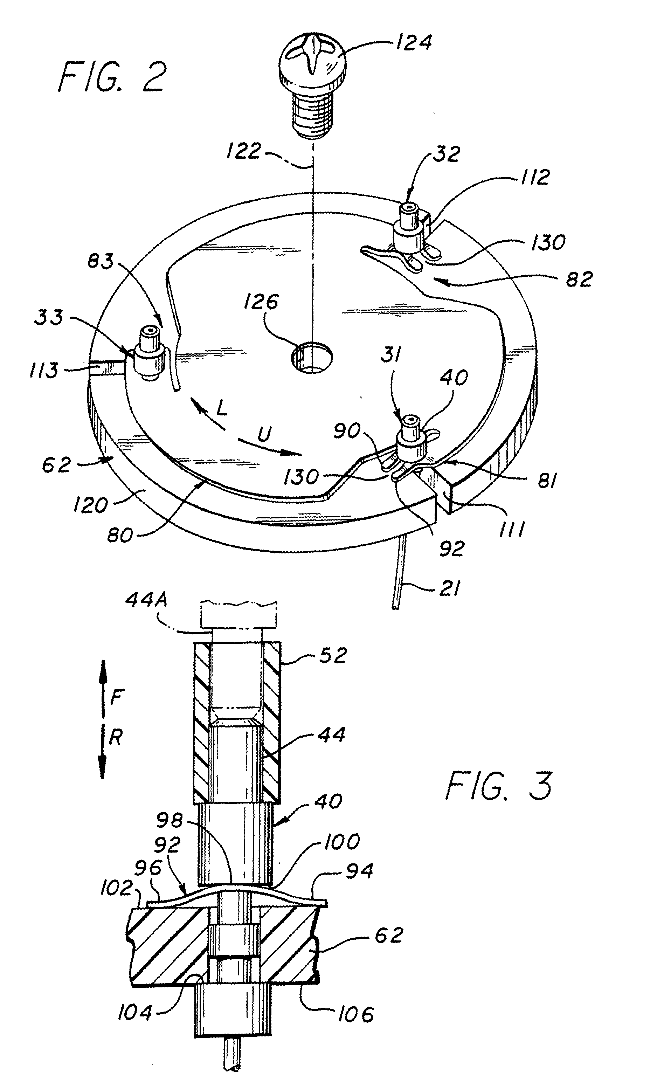

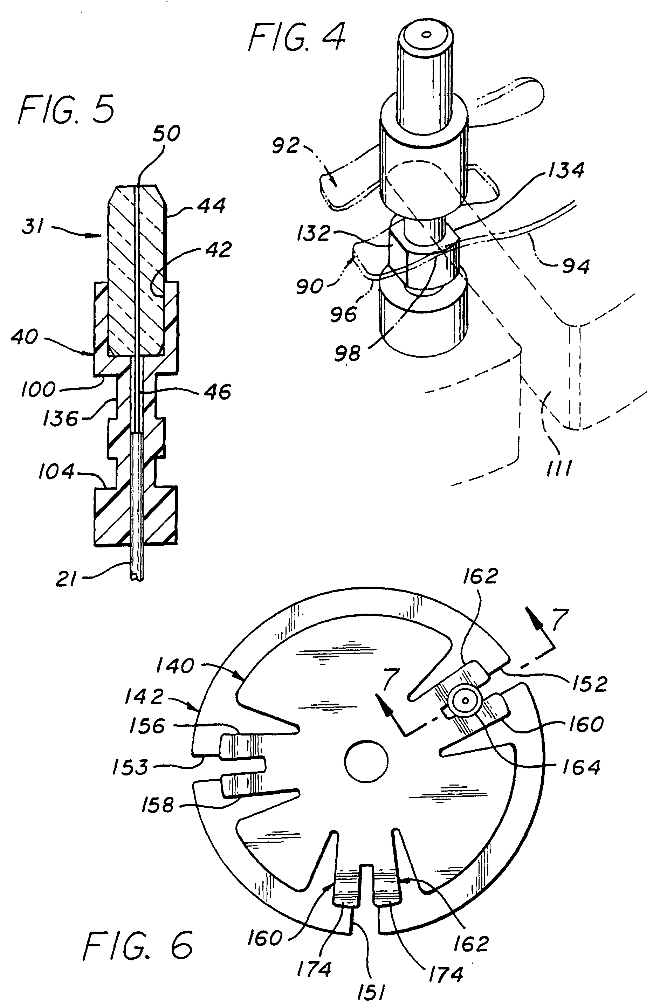

As shown in Fig. 5, each terminus assembly such as 31 includes a terminus body or body device 40, with a recess 42 in its forward end which receives a tip member 44. The buffered fiber 21 includes a small diameter optical fiber 46 which extends through a hole in the tip member 44 and which is joined to the tip member. The extreme front end 50 of the optical fiber lies even with the extreme front end of the tip member 44. As shown in Fig. 3, the front end of the tip member 44 and of a mating tip member 44A which holds a corresponding mating optical fiber, are coupled by having their tips abut each other. A sleeve 52 closely surrounds the tip members to assure that they and the optical fibers are accurately aligned with each other.

As shown in Fig. 1, each connector has a housing 60 which includes a yoke 62 to which each of the terminus assemblies 31 - 33 are mounted. The yoke is trapped between a front shell 64 and a back shell 66. A strain relief member 70 at the rear of the back shell holds the fiber assembly 14, while a seal 72 is used to seal out moisture. The two substantially identical connectors are mated by moving each of them forwardly in a corresponding direction F towards the other until front surfaces 74 of the front shells abut each other. The front shells then can be securely attached as by an attachment device that includes two threadably connected members 76, 78. When the front surfaces 74 of the front shells abut, it is important that the tips of the mating optical fibers, on the terminus bodies which are mounted on the two connectors, also abut. A spring member 80 serves to resiliently bias the terminus bodies in a forward direction F while allowing them to deflect slightly rearwardly in a rearward direction R, to assure fiber tip abutting.

As shown in Fig. 2, the spring member 80 is of the sheet metal type, and has three leaf spring portions or regions 81 - 83 which each serve to resiliently mount corresponding ferrules or terminus bodies 40 on the yoke 62. Each leaf spring portion such as 81 includes a pair of leaves, or leafs 90, 92 that lie on opposite sides of the terminus body. As shown in Figs. 3 and 4, each leaf includes first and second opposite end parts 94, 96 and a forwardly-bowed middle 98. The terminus body has a forward shoulder 100 that abuts the middle 98 of each of the leafs 90, 92, to enable the leafs to bias the body in the forward direction F. The first and second end parts 94, 96 of each leaf are supported on a front surface 102 of the yoke 62. The terminus body has a rear shoulder 104 that abuts the rear surface 106 of the yoke when the connectors are not mated.

As shown in Fig. 2, the yoke has three holes, or hole regions, in the form of slots 111 - 113 that each receives one of the terminus assemblies such as 31. Each slot extends to the periphery 120 of the yoke. With the optical fiber mounted on the tip member and terminus body, the terminus assembly can be moved substantially sidewardly (perpendicular to the forward and rearward directions) into one of the slots. The spring member 80 can pivot on the yoke 62 in a lock direction, L and a release or unlock direction U, about a pivot axis 122. A screw 124 projects through holes 126 in the spring member and yoke, and is attached to a lock nut (126 in Fig. 1). Initially, the spring member 80 has been turned in the unlock direction U away from the position shown in Fig. 2. All three terminus assemblies 31 - 33 are then each installed in one of the corresponding slots 111 - 113. Then the spring member 80 is turned in the lock direction L to cause the leaf spring portions 81 - 83 to project under the forward shoulders of the terminus bodies, with each body being received through the gap 130 between the second ends of the leafs 90, 92. With the spring member turned fully in the lock direction, the middles of the leafs press upwardly against the bodies to resiliently urge them forwardly.

It may be noted that each of the bodies has a center portion with a pair of flat surfaces 132, 134 (Fig. 4) that lie closely within the slot 111, to prevent rotation of the body. It is also possible to provide flats at the location 136 (Fig. 5) immediately below the forward shoulder 100, to allow the sides of the spring leafs to prevent rotation of the body.

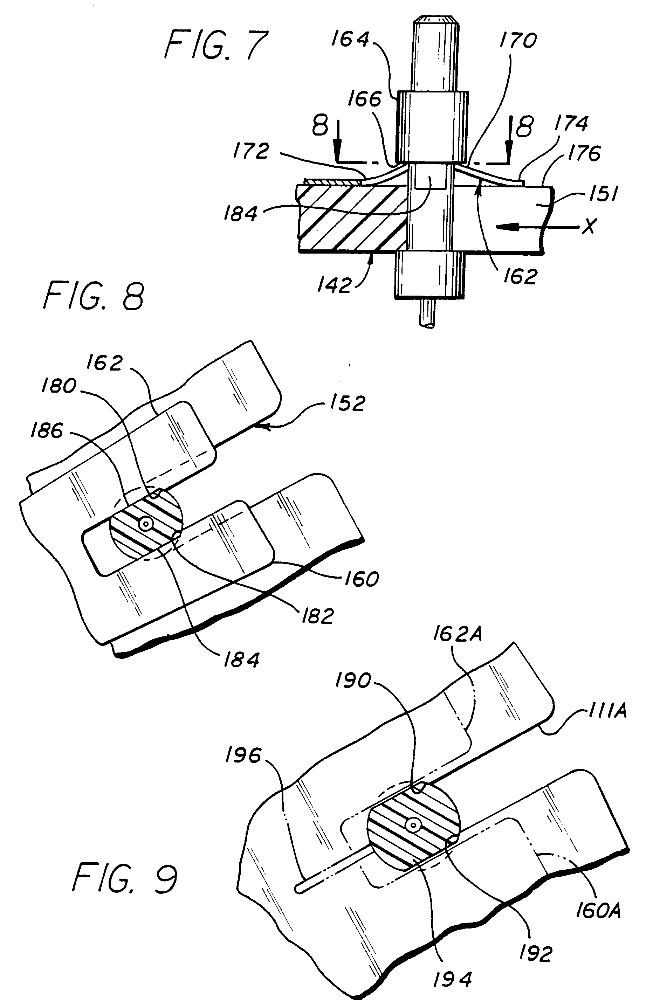

Fig. 6 illustrates a spring member 140 constructed in accordance with another embodiment of the invention, and shown mounted on a yoke 142 that can be mounted in place of the yoke of Figs. 1 - 5. The yoke 142 has three slots 151 - 153 that are largely similar to those of the yoke of Fig. 1. The spring member 140 has a pair of leafs 160, 162 which lie on opposite sides of a corresponding slot 151, instead of both extending largely perpendicular to the slot. Each leaf has edges 156, 158 extending substantially parallel to the length of the adjacent slot. As shown in Fig. 7, when the terminus body 164 has been slid fully in the direction X into the slot 151, the body forward shoulder 166 is pressed forwardly by the middle 170 of the leaf 162, while opposite end parts 172, 174 of the leaf bear against the upper surface 176 of the yoke. The second ends 174 of the two leafs 160, 162 (Fig. 6) bear against yoke locations on opposite sides of the slot 151. The terminus body 164 can be trapped against moving out of the slot, by forming retainer ledges 180, 182 (Fig. 8) on the spring leafs. The engagement of the spring leafs with a pair of flats 184, 186 on a middle portion of the body serves to prevent turning of the body. Fig. 9 illustrates a similar situation, but where the walls of the slot 111A include latch shoulders 190, 192 that trap a flattened middle portion 194 of the body middle in the slot and prevent it from turning. The yoke can be provided with a slit indicated at 196 to enable the slot walls to slightly spring apart and together. The leafs 160A, 162A of the spring member are shown in phantom lines.

The use of leaf spring leafs to bias the terminus body forwardly, enables biasing to be achieved in a low cost spring member of small size in the forward and rearward directions. Also, where more than one terminus assembly is mounted in the connector, a single sheet metal-like spring member can serve to bias all of the terminus bodies. With a movable spring member, such as the pivoting one shown in Figs. 1 - 5, the spring member that biases the terminus bodies forwardly, can also be used to lock them in place. Such locking also can be achieved with a stationary spring member. The provision of slots extending to the periphery of the yoke member, facilitates mounting of the terminus assembly, by merely moving it sidewardly through a slot. This enables individual terminus members to be moved separately into place, as opposed to requiring delicate movement of the yoke while all terminus bodies are maintained in alignment with corresponding cylindrical holes in the yoke. It is also possible to provide a key-shaped slot (in the yoke and/or the spring), with the terminus body inserted into the wide portion and then slid to a position in the narrow portion of the key slot. However, it is possible for the holes to be simple cylindrical or other holes rather than slots, although in that case, the front portion of the terminus body which forms the forward shoulder, must have a smaller diameter than each hole to fit through the hole. This requires that the body portion forming the forward shoulder, be of even smaller width. It is noted that the optical fibers should be kept as straight as possible to minimize losses of light passing therethrough. Some slack is required for installation, but the springs reduce the slack by advancing the terminus and fiber slightly.

Thus, the invention provides an optical fiber connector of relatively simple design, which facilitates the mounting of one or more terminus bodies on a yoke of the connector housing. A spring member is provided that has a leaf spring portion with leafs each having a forwardly-bowed middle that biases the terminus body forwardly. A single sheet metal spring member can be provided with a plurality of leaf spring portions. The hole in the yoke, which receives the terminus body, can be in the form of a slot that extends to the periphery of the body, to facilitate installation of the terminus assembly. Each leaf spring portion includes two leafs lying on opposite sides of the body, with first and second opposite end parts of each leaf bearing against a front surface of the yoke.

It would be possible to have only one end part bear against the yoke, in a cantilevered arrangement, although it is in accordance with the invention as claimed to have both end parts supported. The second end parts of the leafs are unjoined to leave a gap between them, which can receive the terminus body below the front shoulder of the body, until the middles of the leafs bear against the front shoulder of the body. The spring member can be movable sidewardly on the yoke, to move under the body front shoulder after the body has been installed, as by sliding into a slot. The movement can be a pivoting movement of a single spring member with a plurality of leaf spring portions, to move all the spring portions at the same time. In another version of the spring member, the second end parts of the leafs, which have a gap between them, press against locations on the yoke front surface that lie on opposite sides of the slot. A portion of the body lying rearward of the front shoulder, can have flat surfaces that engage sides of the leafs or of the slot, to prevent turning of the terminus body.

Although particular embodiments of the invention have been described and illustrated herein, it is recognized that modifications and variations may readily occur to those skilled in the art, and consequently, it is intended that the claims be interpreted to cover such modifications and equivalents.

## Claims

1. An optical fiber connector (12) that includes a housing (60) having a yoke (62), for connecting to a second connector device (16), wherein said connector (12) includes a terminus assembly (31) that comprises a terminus body (40) with a front part (44) that is coupled to the front end of an optical fiber of an optical assembly (14), wherein said terminus body must be capable of moving slightly forward and rearward with respect to said yoke (62) while being biased forwardly, wherein said yoke (62) has a through hole (111) and has front and rear surfaces (102, 106) facing respectively forwardly and rearwardly and spaced along said hole, wherein said terminus body (40) lies in said hole (111), and has a forward body shoulder (100) lying forward of said yoke front surface, and said connector (12) includes a spring member (80) having a leaf spring portion (81, 82, 83) that includes a pair of leafs (90, 92), which engage said yoke and said terminus body forward shoulder to allow said terminus body to be resiliently deflectable rearwardly, **characterized by**:
each leaf of said pair of leafs (90, 92), having first and second opposite end parts (94, 96) with said second end parts (96) spaced apart and unjoined to leave a gap (130) to receive said terminus body; said end parts (94, 96) abutting said yoke front surface, and said pair of leafs lying on opposite sides of said terminus body, said pair of leafs having a forwardly bowed middle (98) that abuts said terminus body forward shoulder (100) and is resiliently deflectable rearwardly, and
said spring member (80) being movable sidewardly on said yoke front surface (102) to receive said terminus body between said leafs.

2. The optical fiber connector as claimed in claim 1 wherein:
said yoke has a periphery (120), and
said hole (111) is in the form of a slot, that extends sidewardly to said periphery of said yoke, to facilitate installation of said terminus assembly.

3. The optical fiber connector as claimed in claim 1 or 2 for connecting the front ends of each of a plurality of optical fibers of said optical fiber assembly (14) to the front ends of each of a plurality of other optical fiber devices of a second connector device (16), comprising:
said yoke having a plurality of holes (111, 112, 113) extending between said front and rear surfaces (102, 106);
a plurality of terminus assemblies (31, 32, 33) each coupled to the front end of one of said plurality of optical fibers, each including a terminus body (40) lying in one of said holes of said yoke;
said spring member (80) being of a sheet metal type, and
a plurality of said leaf spring portions (81, 82, 83) located at the periphery of said spring member, with each of said leaf spring portions (81, 82, 83) including a pair of leafs (90, 92).

4. The optical fiber connector as claimed in claim 3, wherein:
said yoke has a center and said spring member (80) is pivotally mounted on said yoke center to enable said spring member to pivot between a locking position wherein said leaf middles (98) lie at a position against said terminus body forward shoulders (100), and a release position wherein said middles lie away from the positions of said terminus body forward shoulders.

5. An optical fiber connector (12) that includes a housing (60) having a yoke (142), for connecting to a second connector device (16), wherein said connector (12) includes a terminus assembly (31) that comprises a terminus body (164) with a front part (44) that is coupled to the front end of an optical fiber of an optical assembly (14), wherein said terminus body must be capable of moving slightly forward and rearward with respect to said yoke (142) while being biased forwardly, wherein said yoke (142) has a through hole (151) and has front and rear surfaces (176) facing respectively forwardly and rearwardly and spaced along said hole, wherein said terminus body (164) lies in said hole (151), and has a forward body shoulder (166) lying forward of said yoke front surface, and said connector (12) includes a spring member (140) having a leaf spring portion that includes a pair of leafs (160, 162), which engage said yoke and said terminus body forward shoulder to allow said terminus body to be resiliently deflectable rearwardly,
**characterized by**:
each leaf of said pair of leafs (160, 162), having first and second opposite end parts (172,174) with said second end parts (174) spaced apart and unjoined to leave a gap to receive said terminus body; said end parts (172,174) abutting said yoke front surface, and said pair of leafs lying on opposite sides of said terminus body, said pair of leafs having a forwardly bowed middle (170) that abuts said terminus body forward shoulder (166), and
said yoke having a periphery (120) and said hole (151) being in the form of a slot, that extends sidewardly to said periphery of said yoke, or is in the form of a key-hole shaped slot having a wide portion and a narrow portion, to facilitate installation of said terminus assembly, said pair of leafs extending substantially parallel to the length of the adjacent slot (151).

6. The optical fiber connector as claimed in claim 5 for connecting the front ends of each of a plurality of optical fibers of said optical fiber assembly (14) to the front ends of each of a plurality of other optical fiber devices of a second connector device (16), comprising:
said yoke (142) having a plurality of slots (151,152,153) extending between said front and rear surfaces (176);
a plurality of terminus assemblies each coupled to the front end of one of said plurality of optical fibers, each including a terminus body (164) lying in one of said slots of said yoke;
said spring member (140) being of a sheet metal type, and
a plurality of said leaf spring portions, located at the periphery of said spring member, with each of said leaf spring portions including a pair of leafs (160,162;).

7. A method for assembling an optical fiber connector (12) that includes a housing (60) having a yoke (62), for connecting to a second connector device (16), wherein said connector (12) includes a terminus assembly (31) that comprises a terminus body (40) with a front part (44) that is coupled to the front end of an optical fiber of an optical fiber assembly (14), wherein said terminus body must be capable of moving slightly forward and rearward with respect to said yoke (62) while being biased forwardly, wherein said yoke is formed to have a through hole (111) and has front and rear surfaces (102, 106) facing respectively forwardly and rearwardly and spaced along said hole, wherein said terminus body lies in said hole (111) and has a forward body shoulder (100) lying forward of said yoke front surface, and said connector (12) includes a spring member (80) having a leaf spring portion (81, 82, 83) that includes a pair of leafs (90, 92), which engage said yoke and said terminus body forward shoulder to allow said terminus body to be resiliently deflectable rearwardly, comprising:
forming said spring member (80) of sheet metal, each of said pair of leafs (90, 92), having first and second opposite end parts (94, 96) with said second end parts (96) spaced apart and unjoined to leave a gap (130) to receive said terminus body; said end parts (94, 96) abutting said yoke front surface (102), and said pair of leafs lying on opposite sides of said terminus body, said pair of leafs having a forwardly bowed middle (98) that abuts said terminus body forward shoulder (100) and is resiliently deflectable rearwardly;
mounting said spring member (80) on said yoke (62);
installing said terminus body, having a rearward shoulder (104) of greater width than said yoke hole (111) in said yoke hole (111) with said terminus body forward shoulder lying forward of said yoke front surface (102) and
moving said spring member sidewardly on said yoke front surface (102) to receive said terminus body between said leafs.

8. The method as claimed in claim 7, wherein:
a step of forming said yoke (62) includes forming a plurality of holes (111, 112, 113) each comprising a slot extending sidewardly to the periphery (120) of said yoke;
said step of forming said spring member (80) includes forming a plurality of leaf spring portions (81, 82, 83) along the periphery of said spring member;
said step of mounting includes mounting said spring member (80) so a center of said spring is pivotally mounted on said yoke about an axis (122);
said step of installing includes installing a plurality of terminus assembly devices that are similar to said terminus assemblies (31, 32, 33), and sliding said terminus bodies along said slots (111, 112, 113), and
turning said spring member (80) about said axis (122) so said terminus body is received through said gap (130) between said leaf second end parts (96), until said middle (98) of each of said pairs of leaf lies against the forward shoulder (100) of one of said terminus bodies.

9. A method for assembling an optical fiber connector (12) that includes a housing (60) having a yoke (142), for connecting to a second connector device (16), wherein said connector (12) includes a terminus assembly (31) that comprises a terminus body (164) with a front part (44) that is coupled to the front end of an optical fiber of an optical fiber assembly (14),
wherein said terminus body must be capable of moving slightly forward and rearward with respect to said yoke (142) while being biased forwardly, wherein said yoke is formed to have a through hole (151) and has front and rear surfaces (176) facing respectively forwardly and rearwardly and spaced along said hole, wherein said terminus body lies in said hole (151) and has a forward body shoulder (166) lying forward of said yoke front surface (176), and said connector (12) includes a spring member (140) having a teat spring portion that includes a pair of leafs (160,162), which engage said yoke and said terminus body forward shoulder to allow said terminus body to be resiliently deflectable rearwardly, comprising:
forming said yoke including forming of holes (151) comprising a slot extending sidewardly to a periphery (120) of said yoke, or forming of holes comprising a key-hole slot having a wide portion and a narrow portion;
forming said spring member (140) of sheet metal, each of said pair of leafs (160, 162), having first and second opposite end parts (172,174) with said second end parts (174) spaced apart and unjoined to leave a gap (130) to receive said terminus body; said end parts (172, 174) abutting said yoke front surface, and said pair of leafs lying on opposite sides of said terminus body, said pair of leafs having a forwardly bowed middle (170) that abuts said terminus body forward shoulder (166) and is resiliently deflectable rearwardly, and said pair of leafs extending substantially parallel to the length of the adjacent slot (151);
mounting said spring member on said yoke;
installing said terminus body, having a rearward shoulder of greater width than said hole (151), in said yoke hole (151) with said terminus body forward shoulder lying forward of said yoke front surface;
sliding said terminus body along said slot (151) until said middle of said pairs of leaf lies against the terminus body forward shoulder.

10. The method as claimed in claim 9, wherein:
said step of forming said yoke includes forming a plurality of said holes (151, 152, 153);
said step of forming said spring member (140) includes forming a plurality of leaf spring portions (160, 162, 156, 158) along the periphery of said spring member;
said step of installing said terminus includes installing a plurality of said terminus assemblies.

## Patentansprüche

1. Lichtwellenleiter-Verbindungsvorrichtung (12), die ein Gehäuse (60) mit einem Joch (62) enthält, zur Verbindung mit einer zweiten Verbindungsvorrichtung (16), wobei die Verbindungsvorrichtung (12) eine Endstückanordnung (31) enthält, die einen Endstückkörper (40) mit einem Vorderteil (44) umfasst, der mit dem vorderen Ende eines Lichtwellenleiters einer Lichtwellenleiteranordnung (14) gekoppelt ist, wobei der Endstückkörper in der Lage sein muss, sich in Bezug auf das Joch (62) geringfügig vorwärts und rückwärts zu bewegen, während er in Vorwärtsrichtung vorgespannt ist, wobei das Joch (62) ein Durchgangsloch (111) hat und eine Vorderfläche und eine Rückfläche (102, 106) hat, die nach vorne bzw. nach hinten weisen und entlang dem Loch beabstandet sind, wobei der Endstückkörper (40) in dem Loch (111) liegt und einen vorderen Körperabsatz (100) hat, der vor der Vorderfläche des Joches liegt, und die Verbindungsvorrichtung (12) eine Federelement (80) enthält, das einen Blattfederabschnitt (81, 82, 83) hat, der ein Paar von Blättern (90, 92) enthält, die mit dem Joch und dem vorderen Absatz des Endstückkörpers in Eingriff kommen, um es dem Endstückkörper zu erlauben, dass er nach hinten elastisch auslenkbar ist, **dadurch gekennzeichnet, dass**
jedes Blatt des Paares von Blättern (90, 92) einen ersten und einen zweiten einander gegenüberliegenden Endteil (94, 96) hat, wobei die zweiten Endteile (96) beabstandet und nicht verbunden sind, sodass ein Spalt (130) zur Aufnahme des Endstückkörpers verbleibt; wobei die Endteile (94, 96) an der Vorderfläche des Joches anliegen und das Paar von Blättern auf einander gegenüberliegenden Seiten des Endstückkörpers liegt, welches Paar von Blättern einen nach vorne gebogenen Mittelteil (98) hat, der an dem vorderen Absatz (100) des Endstückkörpers angelegt und nach hinten elastisch auslenkbar ist, und
das Federelement (80) auf der Vorderfläche (102) des Joches seitwärts bewegbar ist, um den Endstückkörper zwischen den Blättern aufzunehmen.

2. Lichtwellenleiter-Verbindungsvorrichtung nach Anspruch 1, bei welcher:
das Joch einen Umfang (120) hat, und
das Loch (111) in Form eines Schlitzes vorliegt, der seitwärts zum Umfang des Joches verläuft, um den Einbau der Endstückanordnung zu erleichtern.

3. Lichtwellenleiter-Verbindungsvorrichtung nach Anspruch 1 oder 2 zum Verbinden der vorderen Enden jedes einer Vielzahl von Lichtwellenleitern der Lichtwellenleiteranordnung (14) mit den vorderen Enden jeder einer Vielzahl von anderen Lichtwellenleitereinrichtungen einer zweiten Verbindungsvorrichtung (16), enthaltend:
das Joch, das eine Vielzahl von Löchern (111, 112, 113) hat, die zwischen der Vorderfläche und der Rückfläche (102, 106) verlaufen;
eine Vielzahl von Endstückanordnungen (31, 32, 33), die jeweils mit dem vorderen Ende eines der Vielzahl von Lichtwellenleitern gekoppelt sind, wobei jede einen Endstückkörper (40) enthält, der in einem der Löcher des Joches liegt;
das Federelement (80), das der Bauart aus Metallblech entspricht, und
eine Vielzahl der Blattfederabschnitte (81, 82, 83), die an dem Umfang des Federelements angeordnet sind, wobei jeder der Blattfederabschnitte (81, 82, 83) ein Paar von Blättern (90, 92) enthält.

4. Lichtwellenleiter-Verbindungsvorrichtung nach Anspruch 3, bei welcher:
das Joch eine Mitte hat und das Federelement (80) an der Jochmitte drehbar montiert ist, um es zu ermöglichen, das Federelement zwischen einer Verriegelungsposition, in welcher die Mittelteile der Blätter (98) an einer Position an den vorderen Absätzen (100) der Endstückkörper anliegen, und einer Freigabeposition, in welcher die Mittelteile von den Positionen der vorderen Absätze der Endstückkörper entfernt liegen, zu drehen.

5. Lichtwellenleiter-Verbindungsvorrichtung (12), die ein Gehäuse (60) mit einem Joch (142) enthält, zur Verbindung mit einer zweiten Verbindungsvorrichtung (16), bei welcher die Verbindungsvorrichtung (12) eine Endstückanordnung (31) enthält, die einen Endstückkörper (164) mit einem Vorderteil (44) enthält, der mit dem vorderen Ende eines Lichtwellenleiters einer Lichtwellenleiteranordnung (14) gekoppelt ist, wobei der Endstückkörper in der Lage sein muss, sich relativ zu dem Joch (142) geringfügig vorwärts und rückwärts zu bewegen, während er in Vorwärtsrichtung vorgespannt ist, wobei das Joch (142) ein Durchgangsloch (151) hat und eine Vorderfläche und eine Rückfläche (176) hat, die nach vorne bzw. nach hinten weisen und entlang dem Loch beabstandet sind, wobei der Endstückkörper (164) in dem Loch (151) liegt und einen vorderen Körperabsatz (166) hat, der vor der Vorderfläche des Joches liegt, und die Verbindungsvorrichtung ein Federelement (140) enthält, das einen Blattfederabschnitt hat, der ein Paar von Blättern (160, 162) enthält, welche mit dem Joch und dem vorderen Absatz des Endstückkörpers in Eingriff kommen, um es zu ermöglichen, dass der Endstückkörper elastisch nach hinten auslenkbar ist, **dadurch gekennzeichnet, dass**
jedes Blatt des Paares von Blättern (160, 162) einen ersten und einen zweiten einander gegenüberliegenden Endteil (172, 174) hat, wobei die zweiten Endteile (174) beabstandet und nicht verbunden sind, sodass ein Spalt (130) zur Aufnahme des Endstückkörpers verbleibt; wobei die Endteile (172, 174) an der Vorderfläche des Joches anliegen und das Paar von Blättern auf einander gegenüberliegenden Seiten des Endstückkörpers liegt, welches Paar von Blättern einen nach vorne gebogenen Mittelteil (170) hat, der an dem vorderen Absatz (166) des Endstückkörpers anliegt, und
das Joch einen Umfang (120) hat und das Loch (151) in Form eines Schlitzes vorliegt, der seitwärts zum Umfang des Joches verläuft, oder in Form eines schlüssellochförmigen Schlitzes vorliegt, der einen breiten Abschnitt und einen schmalen Abschnitt hat, um den Einbau der Endstückkörperanordnung zur erleichtern, wobei das Paar von Blättern im wesentlichen parallel zur Länge des benachbarten Schlitzes (151) verläuft.

6. Lichtwellenleiter-Verbindungsvorrichtung nach Anspruch 5 zum Verbinden der vorderen Enden jedes einer Vielzahl von Lichtwellenleitern der Lichtwellenleiteranordnung (14) mit den vorderen Enden jeder einer Vielzahl von anderen Lichtwellenleitervorrichtungen einer zweiten Verbindungsvorrichtung (16), enthaltend:
das Joch (142), das eine Vielzahl von Schlitzen (151, 152, 153) hat, die zwischen der Vorderfläche und der Rückfläche (176) verlaufen;
eine Vielzahl von Endstückanordnungen, die jeweils mit dem vorderen Ende eines der Vielzahl von Lichtwellenleitern gekoppelt sind, wobei jede einen Endstückkörper (164) enthält, der in einem der Schlitze des Joches liegt;
das Federelement (140), das der Bauart aus Metallblech entspricht, und
eine Vielzahl der Blattfederabschnitte, die an dem Umfang des Federelements angeordnet sind, wobei jeder der Blattfederabschnitte ein Paar von Blättern (160, 162) enthält.

7. Verfahren zum Zusammenbauen einer Lichtwellenleiter-Verbindungsvorrichtung (12), die ein Gehäuse (60) mit einem Joch (62) enthält, zur Verbindung mit einer zweiten Verbindungsvorrichtung (16), wobei die Verbindungsvorrichtung (12) eine Endstückanordnung (31) enthält, die einen Endstückkörper (40) mit einem Vorderteil (44) enthält, der mit dem vorderen Ende eines Lichtwellenleiters einer Lichtwellenleiteranordnung (14) gekoppelt ist, wobei der Endstückkörper in der Lage sein muss, sich geringfügig in Bezug auf das Joch (62) vorwärts und rückwärts zu bewegen, während er in Vorwärtsrichtung vorgespannt ist, wobei das Joch so gebildet ist, dass es ein Durchgangsloch (111) aufweist und eine Vorderfläche und eine Rückfläche (102, 106) hat, die nach vorne bzw. nach hinten weisen und entlang dem Loch beabstandet sind, wobei der Endstückkörper in dem Loch (111) liegt und einen vorderen Körperabsatz (100) hat, der vor der Vorderfläche des Joches liegt, und die Verbindungsvorrichtung (12) ein Federelement (80) enthält, das einen Blattfederabschnitt (81, 82, 83) hat, der ein Paar von Blättern (90, 92) enthält, die mit dem Joch und dem vorderen Absatz des Endstückkörpers in Eingriff kommen, sodass der Endstückkörper elastisch nach hinten auslenkbar ist, enthaltend:
Bilden des Federelements (80) aus Metallblech, wobei jedes Blatt des Paares von Blättern (90, 92) einen ersten und einen zweiten einander gegenüberliegenden Endteil (94, 96) hat, wobei die zweiten Endteile (96) beabstandet und nicht verbunden sind, sodass ein Spalt (130) zur Aufnahme des Endstückkörpers verbleibt; wobei die Endteile (94 ,96) an der Vorderfläche (102) des Joches anliegen und das Paar von Blättern auf einander gegenüberliegenden Seiten des Endstückkörpers liegt, welches Paar von Blättern einen nach vorne gebogenen Mittelteil (98) hat, der an dem vorderen Absatz (100) des Endstückkörpers anliegt und nach hinten elastisch auslenkbar ist;
Montieren des Federelements (80) an dem Joch (62);
Einbauen des Endstückkörpers, der einen hinteren Absatz (104) mit größerer Breite als das Loch (111) in dem Joch hat, in dem Loch (111) im Joch, wobei der vordere Absatz des Endstückkörpers vor der Vorderfläche (102) des Joches liegt, und
Bewegen des Federelements seitlich auf der Vorderfläche (102) des Joches, um den Endstückkörper zwischen den Blättern aufzunehmen.

8. Verfahren nach Anspruch 7, bei welchem:
ein Schritt des Bildens des Joches (62) das Bilden einer Vielzahl von Löchern (111, 112, 113) einschließt, die jeweils einen Schlitz umfassen, der seitwärts zu dem Umfang (120) des Joches verläuft;
der Schritt des Bildens des Federelements (80) das Bilden einer Vielzahl von Blattfederabschnitten (81, 82, 83) entlang dem Umfang des Federelements einschließt;
der Schritt des Montierens das Montieren des Federelements (80) in der Weise, dass eine Mitte der Feder am Joch um eine Achse (192) drehbar montiert ist, einschließt;
der Schritt des Einbauens das Einbauen einer Vielzahl von Endstückanordnungseinrichtungen, die den Endstückanordnungen (31, 32, 33) ähnlich sind, und Verschieben der Endstückkörper entlang den Schlitzen (111, 112, 113) einschließt, und
das Federelement (80) um die Achse (122 ) gedreht wird, sodass der Endstückkörper durch den Spalt (130) zwischen dem zweiten Endteil (96) der Blätter aufgenommen wird, bis der Mittelteil (98) jedes der Blätterpaare an dem vorderen Absatz (100) eines der Endstückkörper anliegt.

9. Verfahren zum Zusammenbauen einer Lichtwellenleiter-Verbindungsvorrichtung (12), die ein Gehäuse (60) mit einem Joch (142) enthält, zur Verbindung mit einer zweiten Verbindungsvorrichtung (16), wobei die Verbindungsvorrichtung (12) eine Endstückanordnung (31) enthält, die einen Endstückkörper (164) mit einem Vorderteil (44) enthält, der mit dem vorderen Ende eines Lichtwellenleiters einer Lichtwellenleiteranordnung (14) gekoppelt ist, wobei der Endstückkörper in der Lage sein muss, sich geringfügig in Bezug auf das Joch (142) vorwärts und rückwärts zu bewegen, während er in Vorwärtsrichtung vorgespannt ist, wobei das Joch so gebildet ist, dass es ein Durchgangsloch (151) aufweist und eine Vorderfläche und eine Rückfläche (176) hat, die nach vorne bzw. nach hinten weisen und entlang dem Loch beabstandet sind, wobei der Endstückkörper in dem Loch (151) liegt und einen vorderen Körperabsatz (166) hat, der vor der Vorderfläche (176) des Joches liegt, und die Verbindungsvorrichtung (12) ein Federelement (140) enthält, das einen Blattfederabschnitt hat, der ein Paar von Blättern (160, 162) enthält, die mit dem Joch und dem vorderen Absatz des Endstückkörpers in Eingriff kommen, sodass der Endstückkörper elastisch nach hinten verschieblich ist, enthaltend:
Bilden des Joches einschließlich des Bildens von Löchern (151), die einen seitwärts zu einem Umfang (120) des Joches verlaufenden Schlitz umfassen, oder Bilden von Löchern, die einen schlüssellochförmigen Schlitz mit einem breiten Abschnitt und einem schmalen Abschnitt umfassen;
Bilden des Federelements (140) aus Metallblech, wobei jedes Blatt des Paares von Blättern (160, 162) einen ersten und einen zweiten einander gegenüberliegenden Endteil (172, 174) hat, wobei die zweiten Endteile (174) beabstandet und nicht verbunden sind, sodass ein Spalt (130) zur Aufnahme des Endstückkörpers verbleibt; wobei die Endteile (172, 174) an der Vorderfläche des Joches anliegen und das Paar von Blättern auf einander gegenüberliegenden Seiten des Endstückkörpers liegt, welches Paar von Blättern einen nach vorne gebogenen Mittelteil (170) hat, der an dem vorderen Absatz (166) des Endstückkörpers anliegt und nach hinten elastisch auslenkbar ist, und welches Paar von Blättern im wesentlichen parallel zur Länge des benachbarten Schlitzes (151) verläuft;
Montieren des Federelements an dem Joch;
Einbauen des Endstückkörpers, der einen hinteren Absatz mit größerer Breite als das Loch (151) in dem Joch hat, in dem Loch (151) im Joch, wobei der vordere Absatz des Endstückkörpers vor der Vorderfläche des Joches liegt;
Verschieben des Endstückkörpers entlang dem Schlitz (151), bis der Mittelteil des Paares von Blättern an dem vorderen Absatz des Endstückkörpers anliegt.

10. Verfahren nach Anspruch 9, bei welchem:
der Schritt des Bildens des Joches das Bilden einer Vielzahl von Löchern (151, 152, 153) einschließt;
der Schritt des Bildens des Federelements (140) das Bilden einer Vielzahl von Blattfederabschnitten (160, 162, 156, 158) entlang dem Umfang des Federelements einschließt;
der Schritt des Einbauens des Endstückes das Einbauen einer Vielzahl der Endstückanordnungen einschließt.

## Revendications

1. Connecteur de fibres optiques (12) qui inclut un boîtier (60) ayant une chape (62) pour connecter à un second dispositif connecteur (16), ledit connecteur (12) incluant un ensemble de borne (31) qui comprend un corps de borne (40) avec une partie frontale (44) qui est couplée à l'extrémité frontale d'une fibre optique d'un ensemble optique (14), dans lequel ledit corps de borne doit être capable de se déplacer légèrement vers l'avant et vers l'arrière par rapport à ladite chape (62) tandis qu'il est sollicité vers l'avant, ladite chape (62) comportant un trou traversant (111 ) ainsi qu'une surface frontale et une surface postérieure (102, 106) tournées respectivement vers l'avant et vers l'arrière et espacées le long dudit trou, ledit corps de borne (40) étant situé dans ledit trou (111 ) et comportant un épaulement antérieur (100) disposé en avant de ladite surface frontale de la chape, et ledit connecteur (12) inclut un élément à ressort (80) ayant une partie formant ressort à lame (81, 82, 83) qui inclut une paire de lames (90, 92) qui engagent ladite chape et l'épaulement antérieur du corps de borne pour permettre audit corps de borne de pouvoir défléchir élastiquement vers l'arrière, **caractérisée en ce que** :
chaque lame de ladite paire de lames (90, 92) comprend une première et une seconde partie terminale opposées (94, 96), lesdites secondes parties terminales (96) étant écartées l'une de l'autre et non réunies pour laisser un intervalle (130) pour recevoir ledit corps de borne ; lesdites parties terminales (94, 96) étant en butée contre ladite surface frontale de la chape, et ladite paire de lames étant disposées sur des côtés opposés dudit corps de borne, ladite paire de lames comprenant une partie médiane (98) cintrée à l'avant, qui vient buter contre ledit épaulement antérieur (100) du corps de borne et qui est capable de défléchir élastiquement vers l'arrière, et
ledit élément à ressort (80) étant mobile latéralement sur ladite surface frontale (102) de la chape pour recevoir ledit corps de borne entre lesdites lames.

2. Connecteur de fibres optiques selon la revendication 1, dans lequel :
ladite chape a une périphérie (120), et
ledit trou (111 ) a la forme d'une fente qui s'étend latéralement vers la périphérie de ladite chape pour faciliter l'installation dudit ensemble de borne.

3. Connecteur de fibres optiques selon l'une ou l'autre des revendications 1 et 2 pour connecter les extrémités frontales de chacune d'une pluralité de fibres optiques dudit ensemble à fibres optiques (14) avec les extrémités frontales de chacun d'une pluralité d'autres dispositifs à fibres optiques d'un second dispositif connecteur (16), comprenant :
ladite chape comporte d'une pluralité de trous (111, 112, 113) s'étendant entre ladite surface frontale et ladite surface postérieure (102, 106) ;
une pluralité d'ensembles de borne (31, 32, 33) couplés chacun à l'extrémité frontale de l'une de ladite pluralité de fibres optiques, incluant chacun un corps de borne (40) disposé dans l'un desdits trous de ladite chape ;
ledit élément à ressort (80) est du type en tôle métallique, et
une pluralité desdites parties formant ressort à lame (81, 82, 83) étant placées à la périphérie dudit élément à ressort, chacune desdites parties formant ressort à lame (81, 82, 83) incluant une paire de lames (90, 92).

4. Connecteur de fibres optiques selon la revendication 3, dans lequel :
ladite chape présente un centre, et ledit élément à ressort (80) est monté en pivotement sur ledit centre de la chape pour permettre audit élément à ressort de pivoter entre une position de blocage dans laquelle lesdites parties médianes (98) des lames sont situées à une position contre lesdits épaulements antérieurs (100) du corps de borne, et une position de libération dans laquelle lesdites parties médianes sont disposées en éloignement des positions desdits épaulements antérieurs du corps de borne.

5. Connecteur de fibres optiques (12) incluant un boîtier (60) ayant une chape (142) pour connecter à un second dispositif connecteur (16), ledit connecteur (12) incluant un ensemble de borne (31) qui comprend un corps de borne (164) avec une partie frontale (44) qui est couplée à l'extrémité frontale d'une fibre optique d'un ensemble optique (14), dans lequel ledit corps de borne doit être capable de se déplacer légèrement vers l'avant et vers l'arrière par rapport à ladite chape (142) tandis qu'il est sollicité vers l'avant, ladite chape (142) ayant un trou traversant (151) ainsi qu'une surface frontale et une surface postérieure (176) tournées respectivement vers l'avant et vers l'arrière et écartées le long dudit trou, dans lequel ledit corps de borne (164) est disposé dans ledit trou (151), et comporte un épaulement antérieur (166) disposé en avant de ladite surface frontale de la chape, et ledit connecteur (12) inclut un élément à ressort (140) ayant une partie formant ressort à lame qui inclut une paire de lames (160, 162) qui engagent ladite chape et ledit épaulement antérieur du corps de borne pour permettre audit corps de borne d'être défléchi élastiquement vers l'arrière, **caractérisé en ce que** :
chaque lame de ladite paire de lames (160, 162) comporte une première et une seconde partie terminale opposées (172, 174), lesdites secondes parties terminales (174) étant écartées l'une de l'autre et non réunies pour laisser un intervalle pour recevoir ledit corps de borne ; lesdites parties terminales (172, 174) étant en butée contre ladite surface frontale de la chape, ladite paire de lames étant disposées sur des côtés opposés dudit corps de borne, et ladite paire de lames ayant une partie médiane (170) cintrée vers l'avant qui vient buter contre ledit épaulement antérieur (166) du corps de borne, et
ladite chape a une périphérie (120) et ledit trou (151) a la forme d'une fente qui s'étend latéralement vers ladite périphérie de ladite chape, ou présente la forme d'une fente en forme de trou de serrure présentant une partie large et une partie étroite, pour faciliter l'installation dudit ensemble de borne, ladite paire de lames s'étendant sensiblement parallèlement à la longueur de la fente adjacente (151).

6. Connecteur de fibres optiques selon la revendication 5 pour connecter les extrémités frontales de chacune d'une pluralité de fibres optiques dudit ensemble à fibres optiques (14) avec les extrémités frontales de chacun d'une pluralité d'autres dispositifs à fibres optiques d'un second dispositif connecteur (16), comprenant :
ladite chape (142) a une pluralité de fentes (151, 152, 153) s'étendant entre ladite surface frontale et ladite surface postérieure (176);
une pluralité d'ensembles de borne couplés chacun à l'extrémité frontale de l'une de ladite pluralité de fibres optiques, incluant chacun un corps de borne (164) disposé dans l'une desdites fentes de ladite chape ;
ledit élément à ressort (140) est du type en tôle métallique, et
une pluralité desdites parties formant ressort à lame, disposées à la périphérie dudit élément à ressort, chacune desdites parties formant ressort à lame incluant une paire de lames (160, 162).

7. Procédé pour assembler un connecteur de fibres optiques (12) qui inclut un boîtier (60) ayant une chape (62) pour connecter à un second dispositif connecteur (16), ledit connecteur (12) incluant un ensemble de borne (31) qui comprend un corps de borne (40) avec une partie frontale (44) qui est couplée à un extrémité frontale d'une fibre optique d'un ensemble à fibres optiques (14), dans lequel ledit corps de borne doit être capable de se déplacer légèrement vers l'avant et vers l'arrière par rapport à ladite chape (62) tandis qu'il est sollicité vers l'avant, ladite chape étant formée de manière à présenter un trou traversant (111 ) ainsi qu'une surface frontale et une surface postérieure (102, 106) tournées respectivement vers l'avant et vers l'arrière et écartées le long dudit trou, ledit corps de borne étant disposé dans ledit trou (111 ) et ayant un épaulement antérieur (100) disposé en avant de ladite surface frontale de la chape, et ledit connecteur (12) inclut un élément à ressort (80) ayant une partie formant ressort à lame (81, 82, 83) qui inclut une paire de lames (90, 92), qui engage ladite chape et ledit épaulement antérieur du corps de borne pour permettre audit corps de borne de défléchir élastiquement vers l'arrière, comprenant :
on forme ledit élément à ressort (80) en tôle métallique, chacune desdites lames de ladite paire de lames (90, 92) ayant une première et une seconde partie terminale opposées (94, 96) telles que lesdites secondes parties terminales (96) sont écartées l'une de l'autre et non jointes pour laisser un intervalle (130) pour recevoir ledit corps de borne ; lesdites parties terminales (94, 96) étant en butée contre ladite surface frontale de la chape (102) de la chape, et ladite paire de lames étant disposées sur des côtés opposés dudit corps de borne, ladite paire de lames ayant une partie médiane (98) cintrée vers l'avant qui vient buter contre ledit épaulement antérieur (100) du corps de borne et qui est capable de défléchir élastiquement vers l'arrière;
on monte ledit élément à ressort (80) sur ladite chape (62) ;
on installe ledit corps de borne, qui présente un épaulement postérieur (104) de largeur supérieure au trou (111) de la chape, dans ledit trou (111) de la chape avec ledit épaulement antérieur du corps de borne étant disposé en avant de ladite surface frontale (102) de la chape, et
on déplace ledit élément à ressort latéralement sur ladite surface frontale (102) de la chape pour recevoir ledit corps de borne entre lesdites lames.

8. Procédé selon la revendication 7, dans lequel :
une étape de formage de ladite chape (62) inclut de former une pluralité de trous (111, 112, 113) comprenant chacun une fente qui s'étend latéralement vers la périphérie (120) de ladite chape ;
ladite étape de formage dudit élément à ressort (80) inclut de former une pluralité de parties formant ressort à lame (81, 82, 83) le long de la périphérie dudit élément à ressort ;
ladite étape de montage inclut de monter ledit élément à ressort (80) de telle manière qu'un centre dudit ressort est monté en pivotement sur ladite chape autour d'un axe (122) ;
ladite étape d'installation inclut d'installer une pluralité de dispositifs d'ensembles de borne qui sont similaires auxdits ensembles de borne (31, 32, 33), et de faire coulisser lesdits corps terminaux le long desdites fentes (111, 112, 113), et
on fait tourner ledit élément à ressort (80) autour dudit axe (122) de telle manière que ledit corps de borne est reçu à travers ledit intervalle (130) entre lesdites secondes parties terminales (96) des lames, jusqu'à ce que ladite partie médiane (98) de chacune des lames de ladite paire de lames soit disposée contre l'épaulemént antérieur (100) de l'un desdits corps terminaux.

9. Procédé pour assembler un connecteur à fibres optiques (12) qui inclut un boîtier (60) ayant une chape (142) pour connecter à un second dispositif connecteur (16), ledit connecteur (12) incluant un ensemble de borne (31) qui comprend un corps de borne (164) avec une partie frontale (44) qui est couplée à l'extrémité frontale d'une fibre optique d'un ensemble à fibres optiques (14), dans lequel ledit corps de borne doit être capable de se déplacer légèrement vers l'avant et vers l'arrière par rapport à ladite chape (142) tandis qu'il est sollicité vers l'avant, ladite chape étant formée de manière à présenter un trou traversant (151) ainsi qu'une surface frontale et une surface postérieure (176) tournées respectivement vers l'avant et vers l'arrière et écartées le long dudit trou, ledit corps de borne étant disposé dans ledit trou (151 ) et présentant un épaulement antérieur (166) disposé en avant de ladite surface frontale (176) de la chape, et ledit connecteur (12) inclut un élément à ressort (140) ayant une partie formant ressort à lame qui inclut une paire de lames (160, 162) qui engagent ladite chape et ledit épaulement antérieur du corps de borne pour permettre audit corps de borne de fléchir élastiquement vers l'arrière, comprenant :
on forme ladite chape, ce qui inclut de former des trous (151) comprenant une fente s'étendant latéralement vers une périphérie (120) de ladite chape, ou de former des trous comprenant une fente en trou de serrure ayant une partie large et une partie étroite ;
on forme ledit élément à ressort (140) en tôle métallique, chacune des lames de ladite paire de lames (160, 162) comprenant une première et une seconde partie terminale opposées (172, 174), lesdites secondes parties terminales (174) étant écartées l'une de l'autre et non jointes pour laisser un intervalle (130) pour recevoir ledit corps de borne ; lesdites parties terminales (172, 174) étant en butée contre ladite surface frontale de la chape, et ladite paire de lames étant disposées sur des côtés opposés dudit corps de borne, ladite paire de lames ayant une partie médiane (170) cintrée vers l'avant, qui vient buter contre ledit épaulement antérieur (166) du corps de borne et qui est capable de défléchir élastiquement vers l'arrière, et ladite paire de lames s'étendant sensiblement parallèlement à la longueur de la fente adjacente (151) ;
on monte ledit élément à ressort sur ladite chape ;
on installe ledit corps de borne, présentant un épaulement postérieur de largeur supérieure audit trou (151), dans ledit trou (151) de la chape, de sorte que ledit épaulement antérieur du corps de borne est disposé en avant de ladite surface frontale de la chape ; et
on fait coulisser ledit corps de borne le long de ladite fente (151 ) jusqu'à ce que ladite partie médiane de ladite paire de lames soit disposée contre ledit épaulement antérieur du corps de borne.

10. Procédé selon la revendication 9, dans lequel :
ladite étape de formage de ladite chape inclut de former une pluralité desdits trous (151, 152, 153) ;
ladite étape de formage dudit élément à ressort (140) inclut de former une pluralité de parties formant ressort à lame (160, 162, 156, 158) le long de la périphérie dudit élément à ressort ; et
ladite étape d'installation dudit ensemble de borne inclut d'installer une pluralité desdits ensembles de borne.
